# EUROPEAN PATENT SPECIFICATION

(11) **EP 3 323 479 B1**
(45) Date of publication and mention of the grant of the patent: **17.07.2019**
(21) Application number: 17202709.6
(22) Date of filing: 21.11.2017
(51) Int. Cl.: A63G 1/00, A63G 27/00, A63G 31/16, B60P 3/025, E04B 1/343

(54) **PLATFORM WITH SUPPORT SYSTEM CONFIGURED TO MOVE THE PLATFORM**
PLATTFORM MIT UNTERSTÜTZUNGSSYSTEM ZUM BEWEGEN DER PLATTFORM
PLATEFORME AVEC SYSTÈME DE SUPPORT CONFIGURÉ POUR DÉPLACER LA PLATEFORME

(30) Priority: 22.11.2016 NL 2017838
(43) Date of publication of application: 23.05.2018
(73) Proprietor: K.I.G. Heerenveen B.V., 8449 EC Terband-Heerenveen (NL)
(72) Inventor: KNIJPSTRA, Hette, 8449 EC Terband-Heerenveen (NL)
(74) Representative: Mink-Lindenburg, Charlotte Hildegard

(56) References cited:
- EP-A1- 0 671 193
- WO-A1-2004/030781
- WO-A2-2010/147980
- AU-B2- 462 297
- US-A- 3 468 533
- US-A- 5 217 209
- US-A- 5 676 601

## Description

The present invention relates to a platform for an installation, wherein the platform is provided with a first support system for supporting on a ground surface. Many embodiments of such a platform are known in the relevant field of which one example is described in AU 462 297, which discloses a platform for an installation, wherein the platform is provided with a first support system for supporting on a ground surface, wherein the first support system comprises support elements and a first and second lifting devices, wherein the first and the second lifting devices are each connected pivotally to the platform and to the support elements for moving the support elements between a position of use, in which the support elements make contact with the ground surface, and a rest position in which the support elements are clear of the ground surface.

The platform according to the present invention is particularly intended for erecting and/or carrying large, heavy installations, for instance a fairground attraction or a drilling installation. The platform preferably forms part of a vehicle, in particular a trailer.

The invention has for its object to improve a platform of the type stated in the preamble and to increase the possible applications thereof.

In the platform according to the invention the first support system comprises for this purpose a first support element and a first and a second lifting device, wherein the first and the second lifting device are each connected pivotally to the platform and the first support element for moving the first support element between a position of use, in which the first support element makes contact with the ground surface, and a rest position in which the first support element is clear of the ground surface and wherein the first support system comprises a first displacing device connected pivotally to the first support element and to the platform for displacing the platform relative to the first support element in a first direction of displacement in the position of use, and wherein the first support system comprises a second displacing device connected pivotally to the first support element and to the platform for displacing the platform relative to the first support element in a second direction of displacement substantially perpendicular to the first direction of displacement in the position of use.

The innovative support system makes it possible to displace the platform independently and to position it very precisely.

The platform can moreover withstand heavy loading and can even displace with the installation thereon. Once erected on the platform an installation no longer need be dismantled (and later erected again) in order to be able to displace the platform. This results in considerable time-saving.

In a further preferred embodiment the platform is provided with a second support system for supporting on the ground surface, wherein the second support system is configured to displace the platform in one of the two orthogonal directions. The further preferred embodiment is optimal in the case of an elongate platform.

According to a further development of the further preferred embodiment with a higher loadability, the second support system comprises a second support element and a third and a fourth lifting device, wherein the third and the fourth lifting device are each connected pivotally to the platform and the second support element for moving the second support element between a position of use, in which the second support element makes contact with the ground surface, and a rest position in which the second support element does not make contact with the ground surface and wherein the second support system comprises a third displacing device connected pivotally to the second support element and to the platform for displacing the platform relative to the second support element in the first direction of displacement in the position of use.

In another preferred embodiment the platform is provided with wheels for travel of the platform in the rest position or transport position of the first and/or the second support system.

The invention also relates to a vehicle, such as a trailer, provided with a platform according to the invention.

The invention will now be described in more detail with reference to the figures.
Figure 1 shows schematically a preferred embodiment of the platform according to the present invention with support systems in a rest position or transport position;
Figure 2 shows schematically the platform of figure 1 with the support systems in a position of use; and
Figures 3-6 show schematically the rear part of the platform in various positions by way of illustrating the operation.

The same components are designated in the figures with the same reference numerals.

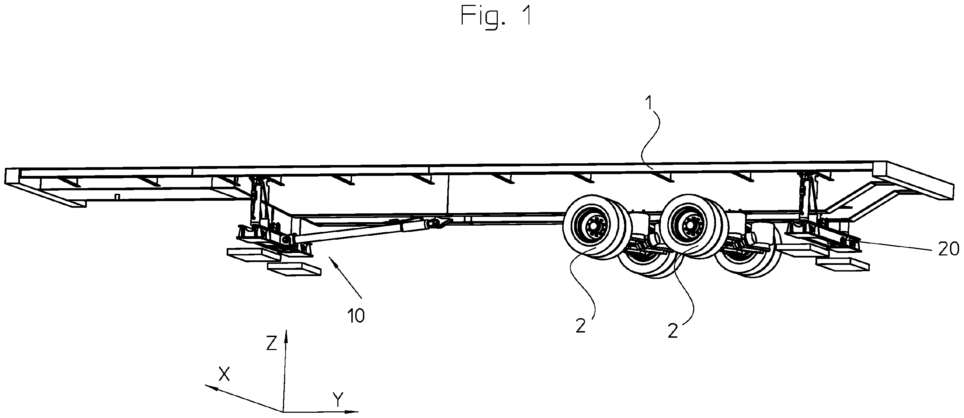

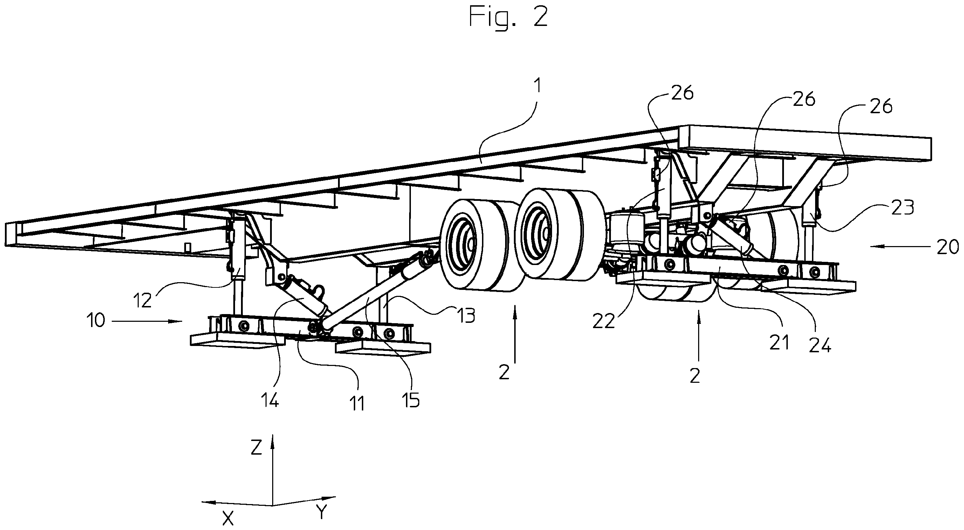

Figures 1 and 2 are schematic views of a preferred embodiment of a platform 1 according to the invention. Platform 1 is intended for the purpose of erecting and/or carrying an installation, for instance a fairground attraction or a drilling installation. The platform is preferably a vehicle, in particular a trailer.

In the shown preferred embodiment the platform is a mobile platform provided with wheels 2. Platform 1 is provided with a first support system 10 and a second support system 20 for supporting on a ground surface. In figure 1 platform 1 supports on wheels 2. In figure 2 platform 1 supports on support systems 10 and 20.

First support system 10 is configured to displace platform 1 in two orthogonal directions of displacement. The first direction of displacement extends in an x-direction for lateral displacement. The second direction of displacement extends in a y-direction for forward or rearward displacement.

First support system 10 comprises a first support element 11, a first lifting device 12 and a second lifting device 13. First lifting device 12 is connected pivotally to platform 1 on one side and connected pivotally to first support element 11 on the other. Second lifting device 13 is likewise connected pivotally to platform 1 on one side and connected pivotally to first support element 11 on the other. By means of lifting devices 12, 13 the first support element 11 is movable between a position of use, in which first support element 11 makes contact with the ground surface, and a rest position in which first support element 11 is clear of the ground surface.

First support system 10 further comprises a first displacing device 14 connected pivotally to first support element 11 on one side and to platform 1 on the other for (lateral) displacement of platform 1 relative to first support element 11 in the first direction of displacement x in the position of use. First displacing device 14 extends obliquely relative to both support element 11 and platform 1 at an angle of more than 0 and less than 90 degrees. First displacing device 14 is preferably located in the plane defined by the two lifting devices 12, 13 and support element 11.

First support system 10 further comprises a second displacing device 15 connected pivotally to first support element 11 on one side and to platform 1 on the other for forward or rearward displacement of platform 1 relative to first support element 11 in the second direction of displacement y in the position of use. Second displacing device 15 likewise extends obliquely relative to both support element 11 and platform 1 at an angle of more than 0 and less than 90 degrees. Second displacing device 15 preferably lies transversely of support element 11.

The first displacing devices 14, 24 each comprise a hydraulic cylinder in the shown preferred embodiment. The second displacing device 15 comprises a pull or push bar with a hydraulic cylinder at the outer end.

The first, second, third and fourth lifting devices 12, 13, 22, 23 are embodied as hydraulic cylinders in the shown preferred embodiment. The hydraulic cylinders can alternatively be embodied as electric cylinders. Suitable mechanical lifting devices are per se known in the relevant field.

All lifting devices and displacing devices 12, 13, 14, 15, 22, 23, 24 are equipped in the shown preferred embodiment with respectively a safety mechanism or safety valve 16, 26. Suitable safety valves for a hydraulic cylinder are for instance a brake valve or a controlled non-return valve.

Support element 11, 21 is embodied as a support beam 11, 21 in the preferred embodiment. Support element 11, 21 has a U-profile which provides space for the pivoting movement of lifting devices 12, 13, 22, 23.

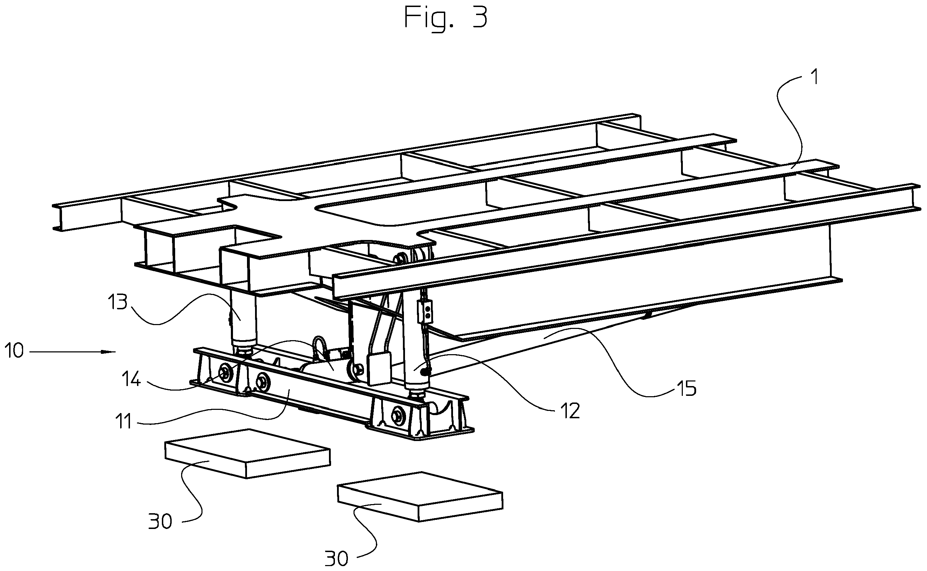

Figures 3-6 show support system 10 in various positions by way of illustrating the operation.

Figure 3 is a schematic view of the rear part of platform 1 of figure 1 which supports on wheels 2 in the rest position of support system 10.

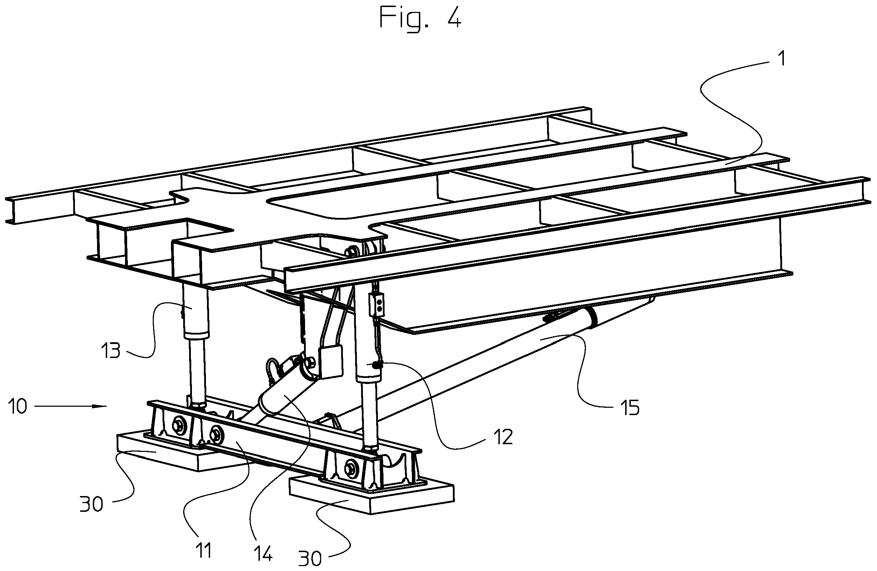

Figure 4 is a schematic view of the rear part of platform 1 of figure 2 which supports on support element 11 in the position of use of support system 10. In figure 4 the lifting devices 12, 13 have been moved so far in lifting direction z that wheels 2 have moved clear of the ground surface. Support element 11 supports on (wooden) blocks 30.

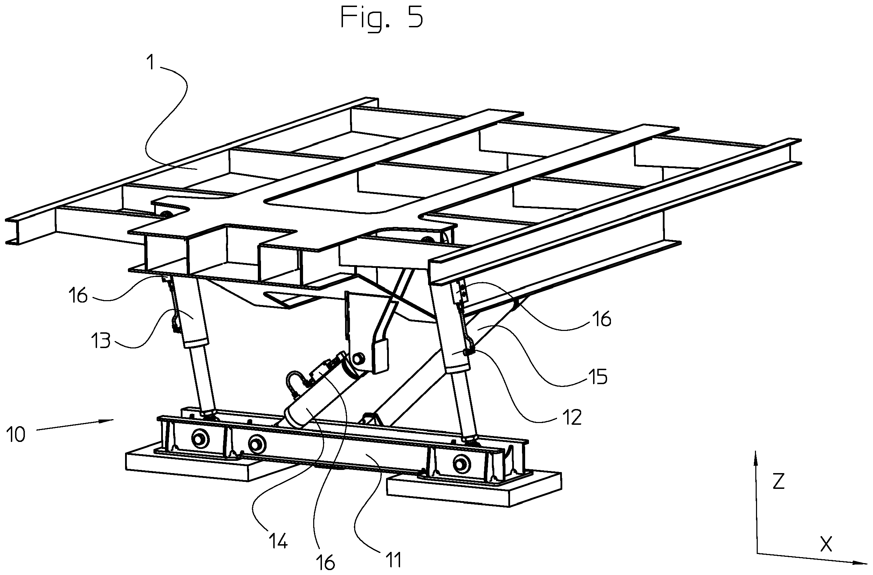

Platform 1 can now be moved as desired in the x-direction and/or y-direction Figure 5 illustrates the movement in the x-direction. Displacing device 14 pulls support element 11 and thus displaces platform 1 to the left in the x-direction. Lifting devices 12, 13 and second displacing device 15 are also pivoted. In similar manner platform 1 can displace to the right in the x-direction when first displacing device 14 pushes against support element 11.

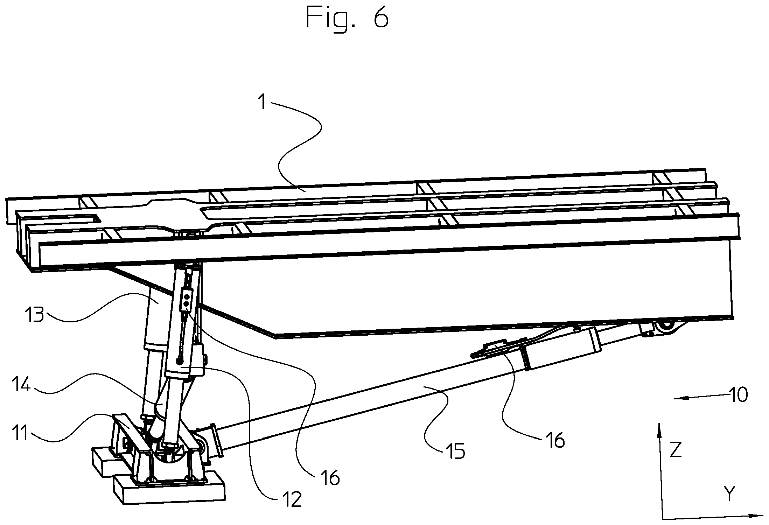

Figure 6 illustrates the movement in the y-direction. Displacing device 15 pushes platform 1 away from support element 11 and thus displaces platform 1 to the right in the y-direction. Lifting devices 12, 13 and first displacing device 14 are also pivoted. In similar manner platform 1 can displace to the left in the y-direction when second displacing device 15 pulls platform 1.

Platform 1 can optionally remain in the position of figure 5 or 6 because of safety mechanism 16 on support system 10. Lifting devices 12, 13 can alternatively be moved back to the rest position until platform 1 again rests on wheels 2 in the displaced position.

In the shown preferred embodiment platform 1 is provided with a second support system 20 for supporting on the ground surface. Second support system 20 is configured to displace the platform laterally in the first direction of displacement x.

Second support system 20 comprises a second support element 21, a third lifting device 22 and a fourth lifting device 23. Third lifting device 22 is connected pivotally to platform 1 on one side and connected pivotally to second support element 21 on the other. Fourth lifting device 23 is likewise connected pivotally to platform 1 on one side and connected pivotally to second support element 21 on the other. By means of lifting devices 22, 23 the second support element 21 is movable between a position of use, in which second support element 21 makes contact with the ground surface, and a rest position in which the second support element is clear of the ground surface.

Second support system 20 further comprises a third displacing device 24 connected pivotally to second support element 21 on one side and to platform 1 on the other for (lateral) displacement of the platform relative to the second support element in the first direction of displacement in the position of use.

The operation of support system 20 is analogous to the operation of support system 10 as explained with reference to figure 5.

It is noted for the sake of completeness that the present invention is not limited to the shown and described preferred embodiment.

The platform can comprise several first and second support systems depending on the form and dimensions of the platform and on the intended application.

In the preferred embodiment the platform is for instance provided with wheels for travel of the platform in the transport position or rest position of the first and the second support system. The platform can however also take a stationary form, without wheels, for instance with stabilizer jacks to replace the wheels. In an alternative embodiment the platform can also be provided with wheels and with support jack bases. The platform can optionally support solely on at least two support systems according to the invention.

It is noted for the sake of completeness that the first and second directions of displacement x and y lie substantially perpendicularly of the lifting direction. The first direction of displacement is a lateral direction, which in the preferred embodiment corresponds to the transverse direction of the platform. The second direction of displacement y is a forward or rearward direction, which in the preferred embodiment corresponds to the longitudinal direction of the platform.

The scope of protection sought therefore extends to any embodiment falling within the text of the claims, as seen in the light of the foregoing description and accompanying drawings.

## Claims

1. Platform (1) for an installation, wherein the platform is provided with a first support system (10) for supporting on a ground surface, wherein the first support system (10) comprises a first support element (11) and a first and second lifting device (12, 13), wherein the first and the second lifting device (12, 13) are each connected pivotally to the platform (1) and to the first support element (11) for moving the first support element between a position of use, in which the first support element makes contact with the ground surface, and a rest position in which the first support element is clear of the ground surface, and wherein the first support system (10) comprises a first displacing device (14) connected pivotally to the first support element (11) and to the platform (1) for displacing the platform relative to the first support element in a first direction of displacement (x) in the position of use, and wherein the first support system (10) comprises a second displacing device (15) connected pivotally to the first support element (11) and to the platform (1) for displacing the platform relative to the first support element in a second direction of displacement (y) substantially perpendicular to the first direction of displacement in the position of use.

2. Platform (1) as claimed in claim 1, wherein the platform is provided with a second support system (20) for supporting on a ground surface, wherein the second support system is configured to displace the platform (1) in one of the two orthogonal directions.

3. Platform (1) as claimed in claim 2, wherein the second support system (20) comprises a second support element (21) and a third and fourth lifting device (22, 23), wherein the third and the fourth lifting device are each connected pivotally to the platform (1) and to the second support element (21) for moving the second support element between a position of use, in which the second support element makes contact with the ground surface, and a rest position in which the second support element does not make contact with the ground surface, and wherein the second support system comprises a third displacing device (24) connected pivotally to the second support element (20) and to the platform (1) for displacing the platform relative to the second support element in the first direction of displacement (x) in the position of use.

4. Platform (1) as claimed in any of the foregoing claims, wherein the platform is provided with wheels (2) for travel of the platform in the rest position of the first and/or the second support system (10, 20).

5. Vehicle, such as a trailer, provided with a platform (1) as claimed in any of the foregoing claims.

## Patentansprüche

1. Plattform (1) für eine Montage, wobei die Plattform mit einem ersten Stützsystem (10) zum Abstützen auf einer Bodenoberfläche versehen ist, wobei das erste Stützsystem (10) ein erstes Stützelement (11) und eine erste und zweite Hebevorrichtung (12, 13) umfasst, wobei die erste und die zweite Hebevorrichtung (12, 13) jeweils schwenkbar mit der Plattform (1) und mit dem ersten Trägerelement (11) verbunden sind, um das erste Stützelement zwischen einer Gebrauchsstellung, in der das erste Stützelement mit der Bodenoberfläche in Kontakt ist, und einer Ruhestellung, in der das erste Stützelement von der Bodenoberfläche abgehoben ist, zu bewegen, und wobei das erste Stützsystem (10) eine erste Verschiebevorrichtung (14) umfasst, die schwenkbar mit dem ersten Stützelement (11) und der Plattform (1) verbunden ist, um die Plattform relativ zum ersten Stützelement in einer ersten Verschiebungsrichtung (x) in der Gebrauchsstellung zu verschieben, und wobei das erste Stützsystem (10) eine zweite Verschiebevorrichtung (15) umfasst, die schwenkbar mit dem ersten Trägerelement (11) und der Plattform (1) verbunden ist, um die Plattform in Bezug auf das erste Trägerelement in eine zweite Verschiebungsrichtung (y) zu verschieben, die im Wesentlichen senkrecht zur ersten Verschiebungsrichtung in der Gebrauchsposition steht.

2. Plattform (1) nach Anspruch 1, wobei die Plattform mit einem zweiten Stützsystem (20) zum Abstützen auf einer Bodenoberfläche versehen ist, wobei das zweite Stützsystem ausgebildet ist, um die Plattform (1) in eine der beiden orthogonalen Richtungen zu verschieben.

3. Plattform (1) nach Anspruch 2, wobei das zweite Stützsystem (20) ein zweites Stützelement (21) und eine dritte und vierte Hebevorrichtung (22, 23) umfasst, wobei die dritte und die vierte Hebevorrichtung jeweils schwenkbar mit der Plattform (1) und mit dem zweiten Stützelement (21) verbunden sind, um das zweite Stützelement zwischen einer Gebrauchsstellung, in der das zweite Stützelement in Kontakt mit der Bodenoberfläche ist, und einer Ruhestellung, in der das zweite Stützelement nicht mit der Bodenoberfläche in Kontakt steht, zu bewegen, und wobei das zweite Stützsystem eine dritte Verschiebevorrichtung (24) umfasst, die schwenkbar mit dem zweiten Stützelement (20) und der Plattform (1) verbunden ist, um die Plattform in Bezug auf das zweite Stützelement in der ersten Verschieberichtung (x) in der Gebrauchsstellung zu verschieben.

4. Plattform (1), wie in einem der vorgenannten Ansprüche beansprucht, wobei die Plattform mit Rädern (2) zum Verfahren der Plattform in der Ruhestellung des ersten und/oder des zweiten Stützsystems (10, 20) versehen ist.

5. Fahrzeug, wie beispielsweise ein Anhänger, das mit einer Plattform (1) versehen ist wie in einem der vorgenannten Ansprüche beansprucht.

## Revendications

1. Plate-forme (1) pour une installation, laquelle plate-forme est munie d'un premier système support (10) pour un support sur une surface du sol, le premier système support (10) comprenant un premier élément support (11) et un premier et un deuxième dispositif de levage (12, 13), le premier et le deuxième dispositif de levage (12, 13) étant reliés chacun de manière pivotante à la plate-forme (1) et au premier élément support (11) pour déplacer le premier élément support entre une position d'utilisation, dans laquelle le premier élément support est en contact avec la surface du sol, et une position de repos dans laquelle le premier élément support est éloigné de la surface du sol, et le premier système support (10) comprenant un premier dispositif de déplacement (14) relié de manière pivotante au premier élément support (11) et à la plate-forme (1) pour déplacer la plate-forme par rapport au premier élément support dans une première direction de déplacement (x) dans la position d'utilisation, et le premier système support (10) comprend un deuxième dispositif de déplacement (15) relié de manière pivotante au premier élément support (11) et à la plate-forme (1) pour déplacer la plate-forme par rapport au premier élément support dans une deuxième direction de déplacement (y) sensiblement perpendiculaire à la première direction de déplacement dans la position d'utilisation.

2. Plate-forme (1) selon la revendication 1, dans laquelle la plate-forme est munie d'un deuxième système support (20) pour un support sur une surface au sol, le deuxième système support étant configuré pour déplacer la plate-forme (1) dans l'une des deux directions orthogonales.

3. Plate-forme (1) selon la revendication 2, dans laquelle le deuxième système support (20) comprend un deuxième élément support (21) et un troisième et un quatrième dispositif de levage (22, 23), le troisième et le quatrième dispositif de levage étant reliés chacun de manière pivotante à la plate-forme (1) et au deuxième élément support (21) pour déplacer le deuxième élément support entre une position d'utilisation, dans laquelle le deuxième élément support est en contact avec la surface du sol, et une position de repos dans laquelle le deuxième élément support n'est pas en contact avec la surface du sol, et le deuxième système support comprenant un troisième dispositif de déplacement (24) relié de manière pivotante au deuxième élément support (20) et à la plate-forme (1) pour déplacer la plate-forme par rapport au deuxième élément support dans la première direction de déplacement (x) dans la position d'utilisation.

4. Plate-forme (1) selon l'une quelconque des revendications précédentes, dans laquelle la plate-forme est munie de roues (2) pour déplacer la plate-forme dans la position de repos du premier et/ou du deuxième système support (10, 20).

5. Véhicule, tel qu'une remorque, muni d'une plate-forme (1) selon l'une quelconque des revendications précédentes.
